# EUROPEAN PATENT APPLICATION

(11) **EP 2 733 005 A2**
(43) Date of publication of application: **21.05.2014**
(21) Application number: 13191767.6
(22) Date of filing: 06.11.2013
(51) Int. Cl.: B60K 37/02

(54) **Vehicular display system**

(30) Priority: 08.11.2012 JP 2012246124
(71) Applicant: Honda Motor Co., Ltd., Tokyo 107-8556 (JP)
(72) Inventor: Aoki, Koji, Saitama, 351-0193 (JP); Ishida, Yoshimitsu, Saitama, 351-0193 (JP); Nakayama, Masaru, Saitama, 351-0193 (JP)
(74) Representative: Feller, Frank

(57) **Abstract**

A vehicular display system (100) includes a mobile device (28) having a mobile display part (74), and a vehicle on-board unit (26) which is previously fixed in the vehicle (10). An application of the mobile device (28) is booted up by a boot-up signal produced by setting the mobile device (28) in the vehicle (10). Preferably, the application receives vehicle information (80) (e.g., a vehicle speed (81)) collected in the vehicle (10) from the vehicle on-board unit (26), and displays the vehicle information (80) on the mobile display part (74).

## Description

The present invention relates to a vehicular display system capable of displaying information for a passenger such as a driver in a vehicle.

A vehicular display device is disclosed in, for example, Japanese Patent Application Laid-Open (JP-A) No. 2011-111123. The disclosed vehicular display device can display the first image (e.g., a vehicle speed, a warning, etc.) on an HUD (Head-Up Display) and the second image (e.g., a speedometer, a tachometer, etc.) on a meter using a light source of a single display (e.g., a projector).

However, a display ECU (Electronic Control Unit) which controls the single display such as a projector need to have a brightness intensity adjusting unit for controlling brightness of the light source of the projector based on the higher illuminance of the illuminance outside the vehicle and the illuminance inside the vehicle detected by an illuminometer outside the vehicle and an illuminometer inside the vehicle, respectively. The display ECU also need to have a pixel value adjusting unit for carrying out control to reduce the pixel value of either of the first image or the second image to be smaller than that of the other image, based on the lower illuminance of the illuminance outside the vehicle and the illuminance inside the vehicle detected by the illuminometer outside the vehicle and the illuminometer inside the vehicle, respectively. In other words, the control of the display ECU is complicated and the production cost of the vehicular display device increases.

The present inventors recognize, by studying improvement of the vehicular display device, that the production cost of the vehicular display device can be reduced by using a mobile device having a mobile display part (e.g., a tablet terminal), instead of using the HUD. Such improvement of the vehicular display device is not known among those skilled in the art at the time the priority Japanese application of the present application is filed, and thereby the improvement may be said to have novelty. Although, in such improvement of the vehicular display device, a passenger need to boot up an application of the mobile device by oneself. In other words, booting up of the application of the mobile device which is used for the improvement of the vehicular display device is troublesome to the passenger. Besides the troublesome of such booting up, booting up of an application of a mobile device used together with a vehicle on-board unit inside the vehicle is also troublesome to the passenger.

An object of the present invention is to provide a vehicular display system in which an application of a mobile device can easily be booted up.

Another object of the present invention may be apparent to those skilled in the art by referring to the aspects, preferable embodiments, and attached drawings which will be illustrated below.

According to the present invention, there is provided a vehicular display system including: a mobile device having a mobile display part; and a vehicle on-board unit which is previously fixed in a vehicle, wherein an application of the mobile device is booted up by a first boot-up signal produced by setting the mobile device in the vehicle.

By simply setting a mobile device having a mobile display part (e.g., a tablet terminal) in a vehicle, a boot-up signal (the first boot-up signal) is produced, and by the boot-up signal, the applications of the mobile device can automatically be booted up. In other words, it is not necessary for the passenger to conduct a special operation such as clicking on an icon to boot up the application of the mobile device. The passenger only has to set the mobile device in the vehicle so as that the application of the mobile device can easily be booted up.

The application may receive a vehicle information, collected in the vehicle, from the vehicle on-board unit and display the vehicle information on the mobile display part.

The mobile display part of the mobile device is used as a display for the vehicle information collected by the vehicle, and thereby the production cost of the vehicular display system can be reduced. Further, since the mobile device itself controls the mobile display part, the control is easy. Further, since the mobile display part of the mobile device can display the vehicle information such as a vehicle speed, the passenger can recognize the vehicle information such as the vehicle speed by seeing the mobile display part of the mobile device instead of a vehicle on-board unit (e.g., a metering equipment) when the mobile device is set in the vehicle. When the mobile display part displays, for example, the vehicle speed, as the vehicle information, the vehicle speed is obtained not by a sensor of the mobile device, for example, an acceleration sensor, but by a sensor of the vehicle, for example, a wheel speed sensor, thereby allowing the passenger to drive the vehicle safely.

The vehicle on-board unit may decide whether the mobile device is set in the vehicle by a detecting unit provided in the vehicle, and the vehicle on-board unit may transmit the first boot-up signal to the mobile device when the mobile device is set in the vehicle.

Since a detecting unit provided in the vehicle automatically detects the mobile device, the passenger only needs to set the mobile device in the vehicle.

The mobile device may have imaging units for picking up an image and decide whether the mobile device is set in the vehicle by the image, and the mobile device may produce the first boot-up signal when the mobile device is set in the vehicle. Since an imaging unit of the mobile device automatically decides the setting of the mobile device, the passenger only needs to set the mobile device in the vehicle.

A coded information may be provided inside the vehicle, and the mobile device may decide that the mobile device is set in the vehicle when the coded information is extracted from the image. Since the imaging unit of the mobile device automatically decides the setting of the mobile device by the coded information, the setting of the mobile device can be more surely decided. In other words, the coded information is easily recognized by the imaging unit of the mobile device, thereby allowing shortening of the time necessary for the decision or restraining an erroneous decision being made.

The coded information may be produced by a blinking pattern of a charging indicator of a vehicle battery provided in the vehicle. The coded information can be produced using a charging indicator provided in the vehicle. In other words, it is not necessary to prepare a special coded information for booting up the application of the mobile device.

The vehicle on-board unit and the mobile device may be wirelessly connected to each other, the application may include an imaging application which enables the imaging units to pick up the image, and when the wireless connection between the vehicle on-board unit and the mobile device is established, a state in which the mobile device is set in the vehicle may be formed, and also a second boot-up signal for booting up the imaging application may be produced. Configured in such manner, different from the exemplary configuration in which the passenger needs to boot up an imaging application (a camera application) of the mobile device by oneself as described above, a boot-up signal (the second boot-up signal) is produced simply by establishing wireless connection between the mobile device and the vehicle on-board unit. The imaging application can automatically be booted up by the boot-up signal (the second boot-up signal). When the imaging application is booted up, then the boot-up signal (the first boot-up signal) is also produced using an image in the imaging unit. In other words, the application of the mobile device (including the imaging application) is booted up by two steps.

A preferable embodiment of the present invention will be described below in detail referring to the attached drawings.
Fig. 1 is a perspective view showing an exemplary arrangement of a mobile device constituting part of a vehicular display system of an embodiment of the present invention;
Fig. 2 is a perspective view showing the interior of a vehicle equipped with the vehicular display system shown in Fig. 1;
Fig. 3 is a front elevational view of the mobile device and related part thereof, showing an exemplary arrangement of a detecting unit which detects the mobile device illustrated in Fig. 1;
Fig. 4A is a side view showing an example for explaining an arrangement of the mobile device;
Fig. 4B and Fig. 4C illustrate examples of images picked up by imaging units located in the front side and the back side of the mobile device illustrated in Fig. 4A, respectively;
Fig. 5 illustrates an exemplary configuration of a vehicle network; and
Fig. 6A and Fig. 6B illustrate examples of external appearances of display screens of a vehicle on-board unit and a mobile device, respectively.

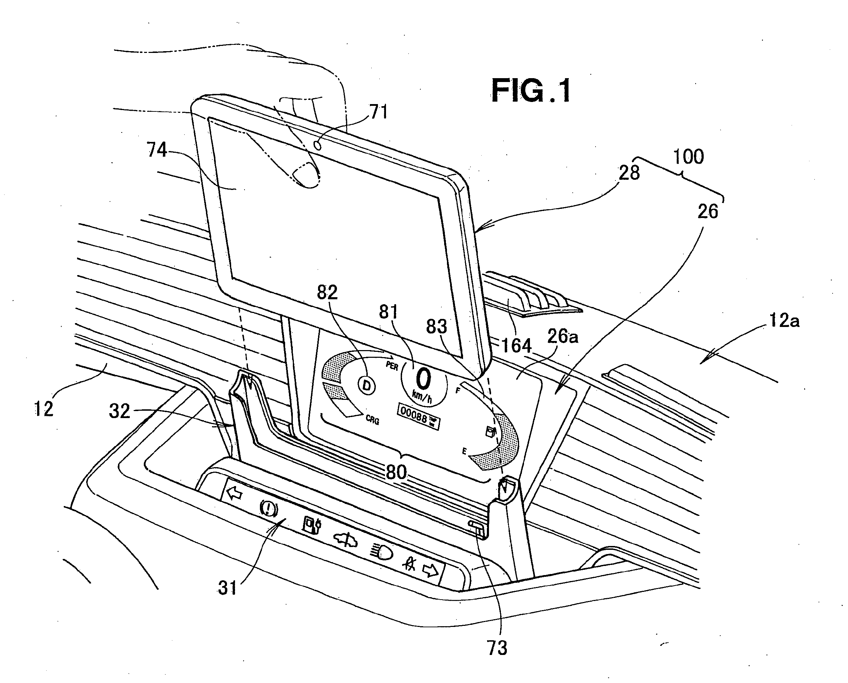

Referring now to Fig. 1, there is shown an exemplary arrangement of a mobile device constituting part of a vehicular display system according to the present invention. As shown in Fig. 1, the vehicular display system 100 is generally comprised of a mobile device 28 and a vehicle on-board unit 26. The mobile device 28 can be set in a vehicle, for example, by inserting the bottom of the mobile device 28 which is held by a left hand of the vehicle passenger in a recessed portion of a holder 32. An application of the mobile device 28 can be booted up by a boot-up signal produced by setting the mobile device 28 in the vehicle.

The boot-up signal is produced simply by setting the mobile device 28 having a mobile display part 74 (e.g., a tablet terminal) in the vehicle. The application of the mobile device 28 is automatically booted up by the boot-up signal. In other words, it is not necessary for the passenger to conduct a special operation such as clicking on an icon (not shown in the drawing) to boot up the application of the mobile device 28. The passenger only has to set the mobile device 28 in the vehicle so that the application of the mobile device 28 can easily be booted up.

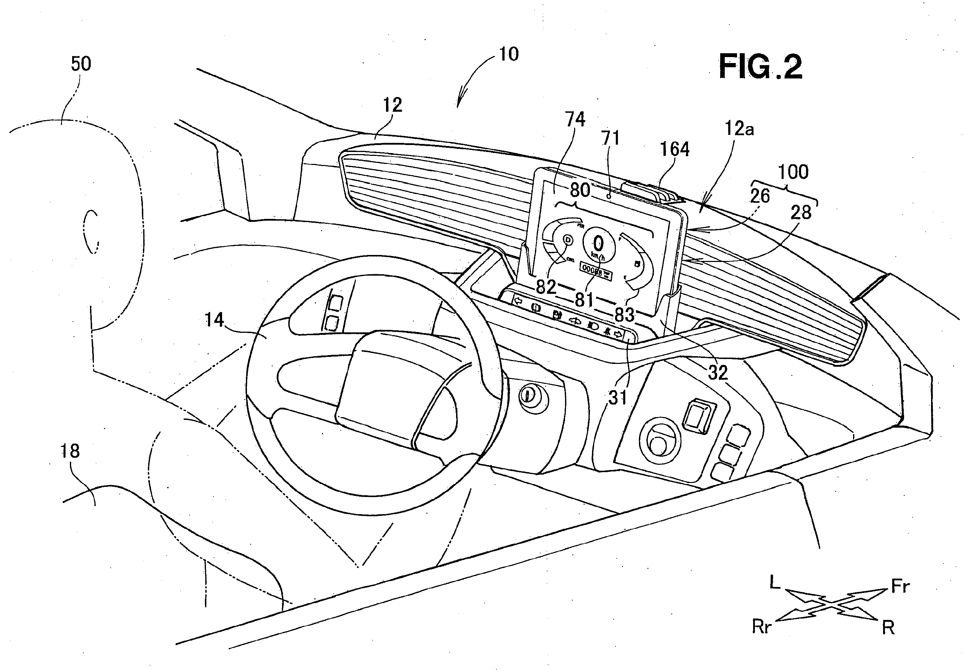

Referring next to Fig. 2, there is shown the interior of the vehicle equipped with the vehicular display system 100. As shown in Fig. 2, the mobile device 28 is set between the passenger such as a driver 50 inside the vehicle 10 and a vehicular display part 26a of the vehicle on-board unit 26 which hides behind the mobile device 28 as illustrated in Fig. 1. Specifically, the mobile device 28 is supported by a holder 32. The mobile device 28 can display vehicle information 80 collected in the vehicle 10. In other words, since the mobile display part 74 of the mobile device 28 can display the vehicle information 80, the mobile device 28 can be set between the driver 50 in the vehicle 10 and the vehicular display part 26a of the vehicle on-board unit 26. In other words, the mobile device 28 can be set in the driver 50 of the vehicular display part 26a.

Preferably, the vehicle information 80 may at least include a vehicle speed 81. The vehicle information 80 such as the vehicle speed 81 is obtained not by a sensor of the mobile device 28, for example, an acceleration sensor (not shown in the drawing), but by a sensor of the vehicle 10, for example, a wheel speed sensor (not shown in the drawing), thereby allowing the passenger to drive the vehicle 10 safely.

In Fig. 2, the mobile device 28 having a mobile display part 74 can be configured with, for example, a tablet terminal. The tablet terminal is typically compact and thin, and therefore, the mobile device 28 configured with the tablet terminal is easily portable and is easy to be set in the vehicle 10. The mobile device 28 may be configured with, for example, a PDA (Personal Digital Assistant) terminal, or a mobile phone terminal or a so-called smart phone. In recent years, the mobile device 28 such as the tablet terminal is sold in low prices. Therefore, the production cost of the vehicular display system using the mobile device 28 can be reduced.

Further, the mobile device 28 itself carries out control of the mobile display part 74, for example, at an OS (Operating System) level of the tablet terminal. Therefore, a special programming required in, for example, JP 2011-111123A is not necessary for the control. An output control at a general application level may be carried out, which makes the control of the mobile display part 74 easy.

In Fig. 2, when the driver 50 or a driver's seat 18, for example, is determined as a reference, the forward direction, the backward direction, the right turn direction, and the left turn direction of the vehicle 10 are represented as codes of Fr ,Rr, R, and L, respectively. In this case, the mobile display part 74 illustrated in Fig. 2 is set in the direction (forward direction) opposite to the direction toward the driver's seat 18 (rearward direction Rr) with reference to the steering wheel 14 of the vehicle 10.

Referring again to Fig. 1, the vehicle on-board unit 26 (the vehicular display part 26a) is previously fixed in the vehicle 10 and configured with, for example, a metering equipment. Specifically, the vehicle on-board unit 26 (a metering equipment) is built-in in a meter panel 12a which is fixed in an instrument panel 12 (see Fig. 2). The meter panel 12a or the instrument panel 12 can be called as a dashboard. The dashboard may be configured by independently combining the meter panel 12a and the instrument panel 12, or integrally formed of a single member. In other words, the meter panel 12a, for example, may be omitted, and in this case, the vehicle on-board unit 26 including the vehicular display part 26a may be fixed in the instrument panel 12 or the dashboard.

As illustrated in Fig. 2, when the mobile device 28 is set between the driver 50 (or the driver's seat 18) and the vehicle on-board unit 26 (or the vehicular display part 26a), the mobile display part 74 of the mobile device 28 can display the vehicle information 80 such as the vehicle speed 81 which is displayed on the vehicular display part 26a.

In Fig. 1, the vehicle 10 includes a warning indicator 31. A warning lamp such as a seat belt warning lamp, a vehicle system warning lamp, a remaining battery charge warning lamp, and a brake warning lamp can be displayed on the warning indicator 31. If the vehicle 10 does not have the warning indicator 31, the vehicular display part 26a can display such warning lamps. As for the example in Fig. 1, the warning indicator 31 can also display an indicator lamp such as a direction indicator lamp and a headlight indicator lamp.

Referring again to Fig. 1, a vehicle display screen displayed on the vehicular display part 26a of the vehicle on-board unit 26 can display not only the vehicle speed 81 (a speedometer) but also other vehicle information 80 such as a shift position meter 82 (e.g., "D"), a remaining battery charge meter 83, an odometer/trip meter, a power meter, and a regeneration meter.

In the embodiment shown in Fig. 2, the vehicle 10 is an electric car. However, in the case when the vehicle 10 is a gasoline-engined car, each of the vehicle display screen displayed on the vehicular display part 26a in Fig. 1 and the mobile display screen displayed on the mobile display part 74 in Fig. 2 may be able to display a remaining gasoline meter in place of the remaining battery charge meter 83.

In Fig. 2, the mobile display screen displayed on the mobile display part 74 of the mobile device 28 can display at least the vehicle speed 81 (a speedometer) displayed on the vehicular display part 26a, and may preferably display other vehicle information 82 and 83. In other words, it is preferable that when the mobile device 28 is set between the driver 50 and the vehicular display part 26a, the driver 50 can recognize all vehicle information 80 essentially displayed on the vehicular display part 26a by seeing the mobile display part 74 instead of the vehicular display part 26a.

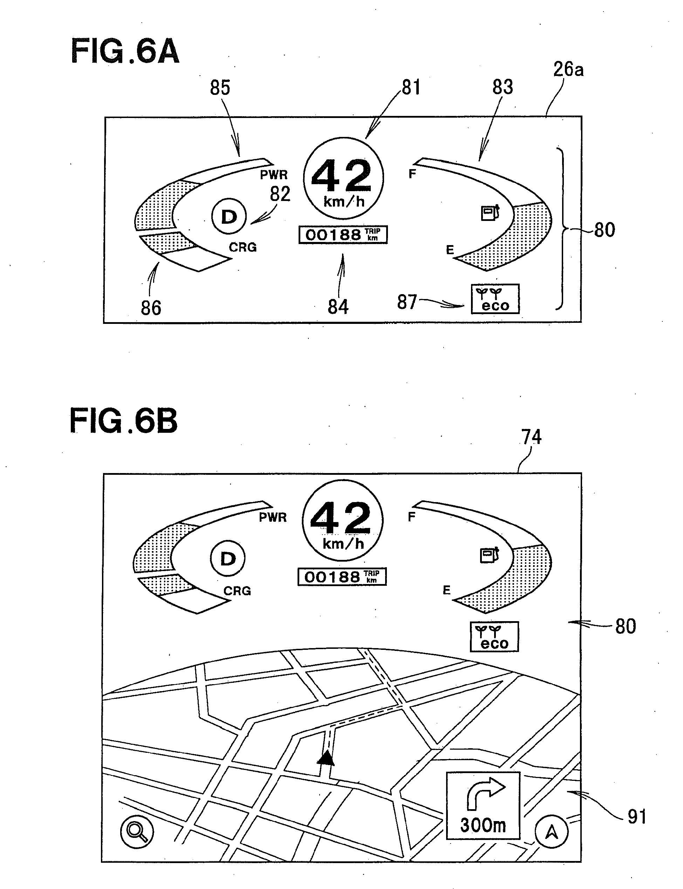

If the resolution or the display size of the mobile display part 74 is smaller than the resolution or the display size of the vehicular display part 26a, the mobile display part 74 may omit a portion of the vehicle information 80. In other words, it is preferable that the resolution or the display size of the mobile display part 74 is larger than the resolution or the display size of the vehicular display part 26a. In this case, the driver 50 easily recognizes the vehicle information, for example, the vehicle speed 81 which is largely displayed. On the other hand, the mobile display part 74 not only can display all the vehicle information 80 essentially displayed on the vehicular display part 26a but also, at the same time, mobile information 91 which may independently be produced in the mobile device 28 as will be illustrated in Fig. 6B.

The mobile device 28 has, for example, a metering application for displaying the vehicle information 80 such as the vehicle speed 81. The metering application can produce a display screen for the vehicle information 80 as illustrated in Fig. 1. The metering application can receive the display screen for the vehicle information 80 and 81 produced in the vehicle on-board unit 26. Alternatively, the metering application can only receive the vehicle information 80 and 81 which is obtained in the vehicle on-board unit 26, and can produce the display screen for the vehicle information 80 and 81 in the mobile device 28.

When the mobile device 28 is set between the driver 50 and the vehicular display part 26a, the driver 50 cannot recognize the vehicular display part 26a (see Fig. 2). In this case, the vehicular display part 26a can be lighted out so as to curb the consumption of a vehicle battery (not shown in the drawing). In the embodiment shown in Fig. 1, a power switch 73 of the vehicular display part 26a, for example, may be provided in the holder 32. Preferably, the power switch 73 is switched off in response to the mobile device 28 being set, thereby lighting out the vehicular display part 26a.

### (First booting up Technique)

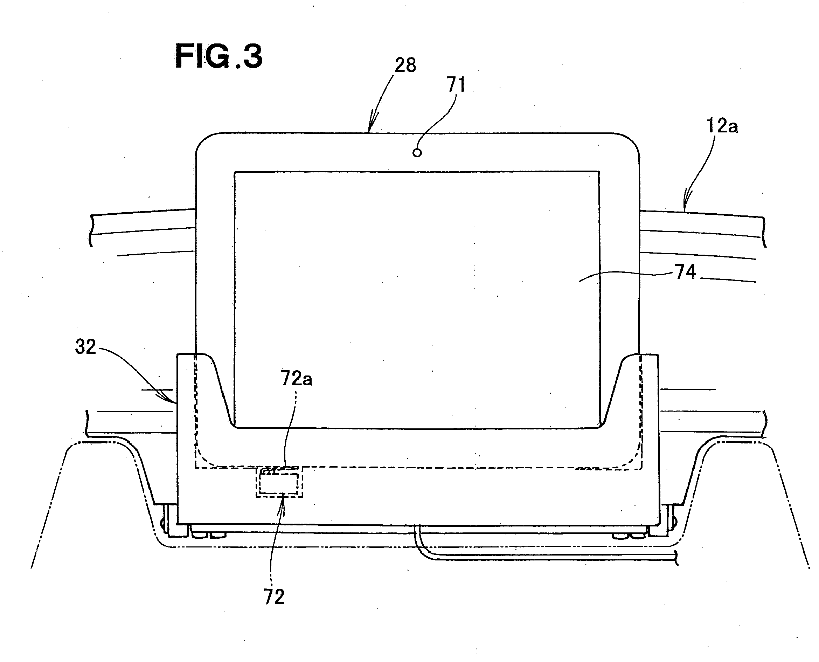

Referring next to Fig. 3, there is shown an exemplary arrangement of a detecting unit 72 for detecting the mobile device 28 shown in Fig. 1. As shown in Fig. 3, the detecting unit 72 is in the form of a mechanical switch capable of mechanically detecting the mobile device 28 being set. The detecting unit (mechanical switch) 72 is arranged in the recessed portion of the holder 32. When the bottom of the mobile device 28 is inserted in the recessed portion of the holder 32, the moving portion 72a of the detecting unit 72 is pressed by the bottom of the mobile device 28, thereby switching on the detecting unit (mechanical switch) 72, by which the detecting unit 72 can output a detection signal (first boot-up signal). An application of the mobile device 28, for example, a metering application, is booted up upon receiving the detection signal (the first boot-up signal) and can display the vehicle information 80, for example, the vehicle speed 81, on the mobile display part 74.

As illustrated in Fig. 3, the detecting unit 72 can be provided in a part of the vehicle 10, such as the holder 32, so that the detecting unit 72 can decide whether the mobile device 28 is set in the vehicle 10 or the holder 32. When the detecting unit (mechanical switch) 72 is switched on from the previous switched-off state, the detecting unit 72 can recognize that the mobile device 28 is set in the vehicle 10 or the holder 32. The detecting unit 72 may be formed by a device which can electrically detect the mobile device 28 being set, such as a piezoelectric device.

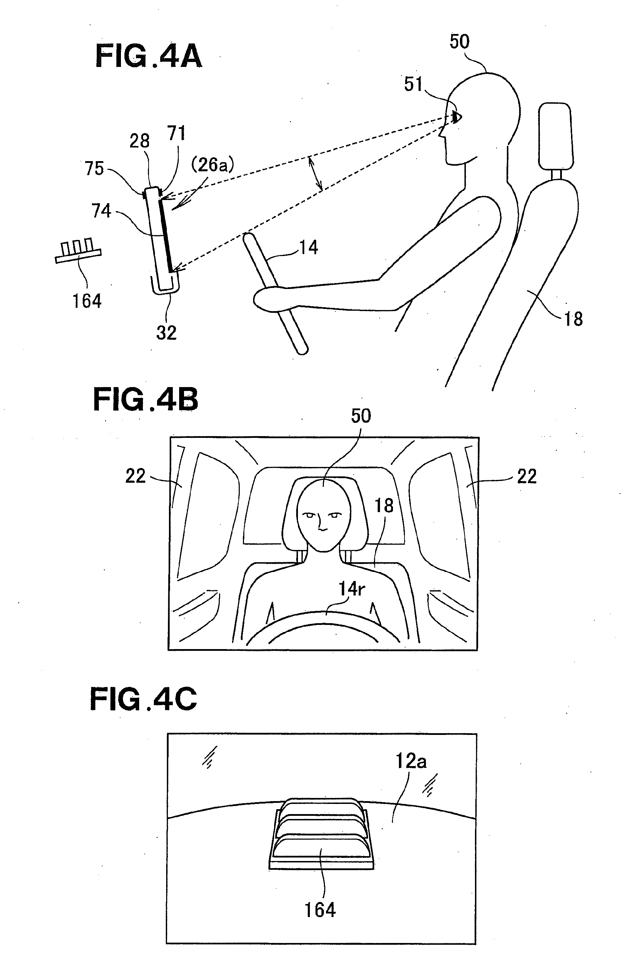

Fig. 4A illustrates the arrangement of the mobile device 28. Fig. 4B and Fig. 4C illustrate examples of images picked up by the imaging units 71 and 75 located in the front side and the back side of the mobile device 28 shown in Fig. 4A, respectively. In the side view of the vehicle 10 shown in Fig. 4A, the line passing the upper edge of a steering wheel 14 (a rim 14r of the steering wheel 14) and the bottom edge of the mobile display part 74 can match the line of sight from an eye 51 (an eye point) of the driver 50. In other words, by arranging the mobile device 28 in such manner, the viewing angle of the driver 50 is maximized in that the steering wheel 14 is outside the viewing angle of the driver 50 from the upper edge to the bottom edge of the mobile display part 74. In this case, the driver 50 can fully recognize the mobile display screen displayed on the mobile display part 74.

In the case when the steering wheel 14 intrudes in the viewing angle of the driver 50, the viewing angle of the driver 50 is narrowed, and thereby the driver 50 cannot recognize a portion of the mobile display screen displayed on the mobile display part 74.

### (Second booting up Technique)

The mobile device 28 can decide whether the mobile device 28 is set in the vehicle 10 or the holder 32 by an image picked up by, for example, the imaging unit 71 in the front side of the mobile device 28 (see Fig. 4B). For example, when the mobile device 28 is previously set in the holder 32, the driver 50 can picture an initial image by the imaging unit 71 and then the mobile device 28 can decide whether the initial image and the present image which is picked up by the imaging unit 71 match each other. Specifically, the mobile device 28 recognizes, for example, a facial feature of the driver 50 (a feature of the driver) from the initial image, and further recognizes the feature of the vehicle, for example, a feature of a seatback of the driver's seat 18, a feature of the rim 14 of the steering wheel 14, and a feature of a B-pillar 22. Then, the mobile device 28 can decide whether the features of the driver and/or the features of the vehicle extracted from the initial image match or resemble the features of the driver and/or the features of the vehicle extracted from the present image. The feature mentioned above is a feature related to a shape.

When the initial image and the present image which is picked up by the imaging unit 71 match or resemble each other, the mobile device 28, or an application of the mobile device 28 such as an imaging application (camera application) which enables, for example, the imaging unit 71 in the front side of the mobile device 28 to carry out imaging, can produce a detection signal (the first boot-up signal). An application of the mobile device 28 such as the metering application is booted up when the detection signal (first boot-up signal) is produced, and can display the vehicle information 80 such as the vehicle speed 81 on the mobile display part 74.

In Fig. 4B, the image which is to be picked up by the imaging unit 71 is determined by the angle of view of the imaging unit 71. Therefore, the image which is picked up by the imaging unit 71 may not include the driver 50, depending on the location in which the mobile device 28 is set. In other words, the location in which the mobile device 28 (or the holder 32) is set can be determined so that the image which is picked up by the angle of view of the imaging unit 71 includes the feature inside the vehicle 10 (a feature of the vehicle).

### (Third booting up Technique)

The mobile device 28 can decide whether the mobile device 28 is set in the vehicle 10 or the holder 32, by the image which is picked up by, for example, the imaging unit 75 in the back side of the mobile device 28 (see Fig. 4C). By the initial image and the present image picked up by the imaging unit 75, a feature of the charging indicator 164 (a feature of the vehicle), for example, can be recognized. When the vehicle 10 is an electric car, the vehicle battery can be charged from an external charging station (not shown) through a charging cable (not shown). The vehicle 10 has the charging indicator 164 which shows the state of charge of the vehicle battery and is recognizable from outside the vehicle 10. The charging indicator 164 is provided on, for example, the meter panel 12a or the dashboard.

When the initial image (e.g., a feature of the charging indicator 164) and the present image picked up by the imaging unit 75 (e.g., a feature of the charging indicator 164) match or resemble each other, the mobile device 28, or an application of the mobile device 28 such as the imaging application (camera application) which enables, for example, the imaging unit 75 in the back side of the mobile device 28 to carry out imaging, can produce the detection signal (first boot-up signal). An application of the mobile device 28, for example, the metering application, is booted up when the detection signal (first boot-up signal) is produced, and can display the vehicle information 80 such as the vehicle speed 81 on the mobile display part 74.

As shown in Fig. 4C, the image which is to be picked up by the imaging unit 75 is determined by the angle of view of the imaging unit 75. For example, the location on the meter panel 12a or the dashboard in which the charging indicator 164 is set can be determined so as the image picked up by the angle of view of the imaging unit 75 to include an item inside the vehicle 10, for example, the charging indicator 164. Further, the location in which the mobile device 28 (or the holder 32) is set can be determined so as the image picked up by the angle of view of the imaging unit 75 to include an item inside the vehicle 10, for example, the charging indicator 164.

### (Fourth booting up Technique)

By modifying the example in Fig. 4C, a coded information such as a QR code (registered trademark) or a one dimensional bar code can be printed, for example, on the meter panel 12a or the dashboard, instead of using the charging indicator 164. Further, a printed item or the like representing a coded information may be arranged on the meter panel 12a or the dashboard, or arranged in a manner, for example, so as the image picked up by the angle of view of the imaging unit 75 in the back side to include the printed item or the like representing the coded information. When the coded information is provided inside the vehicle 10 as described above, the mobile device 28 can extract the coded information from the image picked up by the imaging unit 75 in the back side. The coded information is easily recognized by the mobile device 28, thereby shortening the decision time (processing time) for deciding whether the mobile device 28 is set in the vehicle 10, or restraining an erroneous decision made by the mobile device 28. The printed item or the like representing the coded information may be picked up by, for example, the imaging unit 71 in the front side, and the printed item or the like may be arranged, for example, on the B-pillar 22.

### (Fifth booting up Technique)

In the example in Fig. 4C, the mobile device 28 decides whether the mobile device 28 is set (still image) by the image. However, the mobile device 28 may decide by the image (video) whether the mobile device 28 is set. Particularly, the video of the charging indicator 164 which is picked up by the imaging unit 75 in the back side of the mobile device 28 can be used. Specifically, the coded information may be produced by a blinking pattern of the charging indicator 164, and the mobile device 28 can extract the coded information produced from the video based on, for example, the blinking pattern of the charging indicator 164. For example, the coded information may be related to the charging indicator 164 lighting on several times. Alternatively, the coded information may be, for example, coded in the Morse code by the light-on time and the light-out time of the charging indicator 164. That is, the blinking pattern for indicating the state of charge of the vehicle battery, for which the charging indicator 164 is originally used, may be used as the blinking pattern. Alternatively, a dedicated blinking pattern different from such original blinking pattern may be used. As described above, the coded information can be produced using the charging indicator 164 provided in the vehicle 10 so that such dedicated coded information which is used in the fourth technique of booting up is not necessary to be prepared. The mobile device 28 may decide whether the mobile device 28 is set, by the image (video) which is picked up by the imaging unit 71 in the front side.

The original blinking pattern will be described below. For example, the charged amount of the vehicle battery may be indicated by the number of one or more light-on indicator lamps among a plurality of indicator lamps constituting the charging indicator 164, to represent the state of charge of the vehicle battery. In this case, the original blinking pattern for indicating the state of charge of the vehicle battery is represented by the blinking pattern of the indicator lamp positioned at either end among one or more indication lamps. For example, as for the case in which the charging indicator 164 is constituted by three (a plurality of) indicator lamps, when the charged amount of the vehicle battery indicates, for example, the first level of three levels, only the first indicator lamp may blink at a given interval and the other second and third indicator lamps may be lighted out. Further, for example, when the charged amount of the vehicle battery indicates the second level of three levels, the first indicator lamp may light on and only the second indicator lamp may blink at a given interval, and the remaining third indicator lamp may be lighted out. Further, for example, when the charged amount of the vehicle battery indicates the third level of three levels, the first and second indicator lamps may light on and only the third indicator lamp may blink at a given interval.

Further, in the original blinking pattern, when the vehicle battery is fully charged, all of the plurality of indicator lamps constituting the charging indicator 164 blink. For example, as for the case in which the charging indicator 164 is constituted by three (a plurality of) indicator lamps, when the charged amount of the vehicle battery indicates the fully charged state, the first, second, and third indicator lamps blink at a given interval.

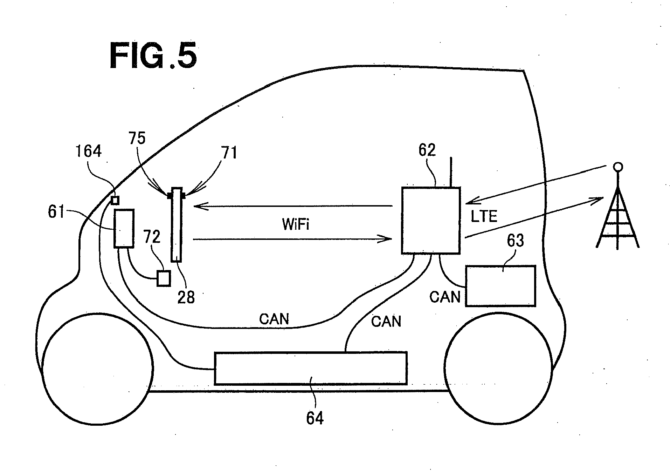

Now, referring to Fig. 5, the exemplary configuration of a vehicle network will be described. A vehicle on-board unit 26 (metering equipment) as illustrated in Fig. 1 can include, for example, a meter ECU 61. The meter ECU 61 can produce a display screen (display signal) for the vehicle information 80 and 81 as illustrated in Fig. 1, and output the display screen (display signal) to the vehicular display part 26a. In Fig. 5, the meter ECU 61 is connected to an onboard network such as a CAN (Controller Area Network). Further, the vehicle 10 can include a communication unit 62, a motor ECU 63, and a battery ECU 64, which are connected to the CAN.

In Fig. 5, the meter ECU 61 can receive information such as the vehicle speed obtained by a wheel speed sensor (not shown) from the motor ECU 63 through the CAN. The motor ECU 63 handles various information such as the vehicle speed, the shift position, and the accelerator position, and controls the power of the motor (not shown) which is a driving source of the vehicle 10. At the same time, the motor ECU 63 can output information such as the present motor power, speed, and shift position to the meter ECU 61 in real time. The vehicle 10 in the illustrated embodiment is an electric car. If the vehicle 10 is a gasoline-engined car, the vehicle 10 can include an FI (Fuel Injection) ECU in place of the motor ECU 63. The FIECU handles various information, for example, the vehicle speed, the shift position, and the accelerator position, and controls the amount of fuel injection to the engine (not shown) which is a driving source of the vehicle 10. At the same time, the FIECU can output information such as the present engine rotational speed, vehicle speed, and shift position to the meter ECU 61 in real time.

In Fig. 5,the battery ECU 64 handles information such as a remaining amount and a charged amount of the vehicle battery (not shown), and controls discharging and charging of the vehicle battery. At the same time, the battery ECU 64 can output such information to the meter ECU 61 in real time. The battery ECU 64 can also control the charging indicator 164. For example, the battery ECU 64 can produce a blinking pattern (coded information) of the charging indicator 164 in the fifth booting up technique described above, within a given time period after an ACC power is supplied to the vehicle on-board unit 26 (metering equipment).

The communication unit 62 includes, for example, a WiFi (Wireless Fidelity) communication module (not shown) and a CAN communication module (not shown). For example, the communication unit 62 can wirelessly transmit a display screen (display signal) for the vehicle information 80 and 81 as illustrated in Fig. 1 to the mobile device 28 through the meter ECU 61. As described above, the meter ECU 61 (vehicle on-board unit 26) and the mobile device 28 may preferably be wirelessly connected, and the mobile device 28 can receive the display screen (display signal) for the vehicle information 80 and 81 from the meter ECU 61. When the display screen (display signal) for the vehicle information 80 and 81 is produced in the mobile device 28, the mobile device 28 may only receive the vehicle information 80 and 81 from the meter ECU 61.

With the vehicle on-board unit 26 and the mobile device 28 wirelessly connected to each other, the mobile device 28 can easily receive the vehicle information 80 and 81 (the vehicle information 80 and 81 is itself a display screen for the vehicle information 80 and 81) from the vehicle on-board unit 26. In other words, if the vehicle on-board unit 26 and the mobile device 28 are to be connected to each other by wire, the driver 50 should connect the vehicle on-board unit 26 and the mobile device 28 when the mobile device 28 is set in the vehicle 10. This operation is troublesome to the driver 50.

In Fig. 5, the communication unit 62 includes, for example, an LTE (Long Term Evolution) communication module (not shown) and can be connected to, for example, a mobile phone communication network. The communication unit 62 can access the information outside the vehicle 10 such as the Internet information through the mobile phone communication network. Therefore, when the mobile device 28 has, for example, a navigation application, the navigation application can properly receive the necessary information outside the vehicle 10 through the communication unit 62.

By modifying the configuration in Fig. 5B, the communication unit 62 may include, for example, a Bluetooth (registered trademark) communication module (not shown), and the meter ECU 61 (vehicle on-board unit 26) and the mobile device 28 may be wirelessly connected to each other by the Bluetooth communication method. Further, the mobile phone communication module (not shown) may be built-in in the mobile device 28 instead of being built-in in the communication unit 62. The mobile device 28 may have, for example, a 3G communication module (not shown), and the application of the mobile device 28, for example, the navigation application, may properly receive the necessary information outside the vehicle 10 through the 3G communication module.

In the case in which the detecting unit 72 is provided in the vehicle 10 as in the first booting up technique described above, the meter ECU 61 (vehicle on-board unit 26) which is connected to the detecting unit 72 can wirelessly transmit a detection signal from the detecting unit 72 to the mobile device 28 as a boot-up signal (first boot-up signal) by, for example, the WiFi communication method or the Bluetooth communication method. The application of the mobile device 28 such as the metering application can be booted up by receiving the detection signal (first boot-up signal).

Fig. 6A and Fig. 6B illustrate examples of external appearances of the display screens of the vehicle on-board unit 26 and the mobile device 28, respectively. In Fig. 6A, the display screen displayed on the vehicular display part 26a of the vehicle on-board unit 26 can display not only the vehicle speed 81 (speedometer) but also other vehicle information 80 such as a shift position meter 82, a remaining battery charge meter 83, an odometer/trip meter 84, a power meter 85, a regeneration meter 86, and an ecometer 87.

For example, as illustrated in Fig. 6B, the mobile display part 74 may preferably display not only all of the vehicle information 80 which is essentially displayed on the vehicular display part 26a but also, at the same time, the portable information 91 which can independently be produced in the mobile device 28. By seeing the mobile display part 74, the driver 50 can also recognize the portable information 91 such as the navigation information. As in this manner, the vehicle information 80 (vehicle contents) such as the vehicle speed 81 and the mobile information 91 (mobile contents) such as the navigation information are centrally displayed on, or controlled by, the mobile display part 74. Whereby, the movement of the line of sight of the driver 50 can be minimized, thereby allowing the driver 50 to concentrate on the driving of the vehicle 10.

In the case when the mobile display part 74 simultaneously displays the vehicle information 80 and the mobile information 91, the display screen displayed on the mobile display part 74 is, for example, configured with two screens each of which having a display size provided by dividing the mobile display part 74 into an upper part and a lower part. The upper part of the display screen can correspond to the vehicle information 80 and 81, and the lower part of the display screen can correspond to the portable information 91. The information in the lower part of the display screen displayed on the mobile display part 74 increases the movement of the line of sight of the driver 50. In other words, the information in the upper part of the display screen displayed on the mobile display part 74 can minimize the movement of the line of sight of the driver 50. By arranging the vehicle information 80 such as the vehicle speed 81 on the upper part of the display screen, the driver 50 can further concentrate on the driving of the vehicle 10.

The display screen displayed on the mobile display part 74 is controlled by an application of the mobile device 28 (e.g., a navigation application or an integrated application). Such application is booted up by, for example, the boot-up signal (first boot-up signal) of the first to fifth booting up techniques as described above, and the mobile display part 74 can simultaneously display the vehicle information 80 and the portable information 91. For example, in the second to fifth booting up techniques described above, the imaging units 71 and 75 in the front side and/or the back side of the mobile device 28 need to be booted up by, for example, the imaging application (camera application) of the mobile display part 74. In other words, in the case in which the application of the mobile device 28 includes, for example, the navigation application and the imaging application, the application of the mobile device 28 is booted up by two steps. Specifically, for example, the imaging application is booted up first, and then the navigation application is booted up.

The application of the mobile device 28, for example, the imaging application, may be booted up by the driver 50 by oneself, though it is preferable that the application is automatically booted up. Specifically, for example, simply by establishing wireless connection between the mobile device 28 and the vehicle on-board unit 26, a boot-up signal (second boot-up signal) is produced, and the imaging application can automatically be booted up by the boot-up signal (second boot-up signal). The second boot-up signal can be produced by the application of the mobile device 28, for example, the communication application, when the wireless connection between the vehicle on-board unit 26 and the mobile device 28 is established, or alternatively by the vehicle on-board unit 26 itself (by the communication application of the vehicle on-board unit 26).

After the ACC power is supplied to the vehicle on-board unit 26 (metering equipment), the application of the vehicle on-board unit 26, for example, the communication application, can communicate with the application of the mobile device 28, for example, the communication application, and thereby the wireless communication between the vehicle on-board unit 26 and the mobile device 28 is automatically established. However, in order to complete the establishment of the wireless connection between the vehicle on-board unit 26 and the mobile device 28 at an earlier timing, for example, the power from the vehicle battery may continuously be supplied to the vehicle on-board unit 26 (metering equipment) so that the application of the vehicle on-board unit 26, for example, the communication application, can continuously communicate with the application of the mobile device 28, for example, the communication application. That is, the vehicle 10 (e.g., the application of the vehicle on-board unit 26, for example, the communication application) may intermittently transmit a search signal for the mobile device 28 to a given range (e.g., inside the vehicle 10 and the exterior nearby the vehicle 10) all the time. In this case, when the mobile device 28 enters the given range and receives the search signal, the establishment of the wireless connection between the vehicle on-board unit 26 and the mobile device 28 is immediately completed, thereby forming a state in which the mobile device 28 is set in the vehicle (production of the second boot-up signal). Therefore, the imaging units 71 and 75 of the mobile device 28 are immediately allowed to carry out imaging, and further, the earlier production of the first boot-up signal (booting up of the application of the mobile device 28) can be provided.

A vehicular display system (100) includes a mobile device (28) having a mobile display part (74), and a vehicle on-board unit (26) which is previously fixed in the vehicle (10). An application of the mobile device (28) is booted up by a boot-up signal produced by setting the mobile device (28) in the vehicle (10). Preferably, the application receives vehicle information (80) (e.g., a vehicle speed (81)) collected in the vehicle (10) from the vehicle on-board unit (26), and displays the vehicle information (80) on the mobile display part (74).

## Claims

1. A vehicular display system (100) comprising:
a mobile device (28) having a mobile display part (74); and
a vehicle on-board unit (26) which is previously fixed in a vehicle (10),
wherein
an application of the mobile device (28) is booted up by a first boot-up signal produced by setting the mobile device (28) in the vehicle (10).

2. The vehicular display system according to claim 1, wherein
the application receives vehicle information (80), collected in the vehicle (10), from the vehicle on-board unit (26), and displays the vehicle information (80) on the mobile display part (74).

3. The vehicular display system according to claim 2, wherein
the vehicle on-board unit (26) decides (10) whether the mobile device (28) is set in the vehicle (10) by a detecting unit (72) provided in the vehicle, and
the vehicle on-board unit (26) transmits the first boot-up signal to the mobile device (28) when the mobile device (28) is set in the vehicle (10).

4. The vehicular display system according to claim 1 or 2, wherein
the mobile device (28) has imaging units (71, 75) for picking up an image, and decides whether the mobile device (28) is set in the vehicle (10) by the image, and
the mobile device (28) produces the first boot-up signal when the mobile device (28) is set in the vehicle (10).

5. The vehicular display system according to claim 4, wherein
a coded information is provided inside the vehicle (10), and
the mobile device (28) decides that the mobile device (28) is set in the vehicle (10) when the coded information is extracted from the image.

6. The vehicular display system according to claim 5, wherein the coded information is produced by a blinking pattern of a charging indicator (164) of a vehicle battery provided in the vehicle (10).

7. The vehicular display system according to any one of claims 4 to 6, wherein
the vehicle on-board unit (26) and the mobile device (28) are wirelessly connected to each other,
the application includes an imaging application which enables the imaging units (71, 75) to pick up the image, and
when the wireless connection between the vehicle on-board unit (26) and the mobile device (28) is established, a state in which the mobile device (28) is set in the vehicle (10) is formed, and also a second boot-up signal for booting up the imaging application is produced.
